# EUROPEAN PATENT APPLICATION

(11) **EP 4 733 249 A2**
(43) Date of publication of application: **29.04.2026**
(21) Application number: 25207929.8
(22) Date of filing: 10.10.2025
(51) Int. Cl.: C01B 3/065

(54) **TREATING AN AT LEAST PARTIALLY UNCONSUMED HYDROGEN GENERATOR CARTRIDGE**

(30) Priority: 25.10.2024 US 202418927471
(71) Applicant: Honeywell International Inc., Charlotte, NC 28202 (US)
(72) Inventor: KALE, Matt, Charlotte, 28202 (US); HARRINGTON, Forrest, Charlotte, 28202 (US); KAKALIOS, David, Charlotte, 28202 (US); MOEN, Ryan, Charlotte, 28202 (US); ARZADON, Amber, Charlotte, 28202 (US); MOORE, Colin, Charlotte, 28202 (US); KNAEBLE, William, Charlotte, 28202 (US); STRAVATO, Jeffrey, Charlotte, 28202 (US); COTE, Tyler, Charlotte, 28202 (US); ALMODOVAR, Jose, Charlotte, 28202 (US); PARK, Jong, Charlotte, 28202 (US); CENTA, Andrew, Charlotte, 28202 (US)
(74) Representative: Ingrassia, Fisher & Lorenz UK Ltd.

(57) **Abstract**

A method of treating an at least partially unconsumed hydrogen generator cartridge including water and a metal hydride includes treating the at least partially unconsumed hydrogen generator cartridge to form a treated hydrogen generator cartridge. When subjected to testing conditions the treated hydrogen generator cartridge produces no hydrogen gas or produces hydrogen gas at a lower rate than the at least partially unconsumed hydrogen generator cartridge subjected to the testing conditions. The testing conditions include heating at less than or equal to 300 °C, agitation, exposing the metal hydride to a protic solvent, or a combination thereof.

## Description

### BACKGROUND

Metal hydride materials can be used in cartridges to generate hydrogen on demand for lightweight power applications, such as to improve energy density compared to batteries. However, hydrogen generator cartridges that utilize reactive metal hydride hydrolysis processes often will not completely use all reactive fuel during the course of normal operation. This leaves a reactive fuel co-located with protic hydrolysis reactants that can potentially lead to dangerous conditions if mishandled.

### SUMMARY OF THE INVENTION

Various aspects of the present disclosure provide a method of treating an at least partially unconsumed hydrogen generator cartridge including water and a metal hydride. The method includes treating the at least partially unconsumed hydrogen generator cartridge, to form a treated hydrogen generator cartridge. Treating the at least partially unconsumed hydrogen generator cartridge includes removing the water from the hydrogen generator cartridge; adding a chemical barrier to the metal hydride as a physical barrier to slow or prevent further reaction of the metal hydride; dissolving the metal hydride in a solvent including tetrahydrofuran, a (C₁-C₁₀)alcohol, isopropyl alcohol, ethanol, methanol, ethyl acetate, a di(C₁-C₁₀)alkyl ether, benzene, toluene, or a combination thereof, and removing the solvent from the cartridge; reacting the metal hydride with a protic solvent in a non-reactive miscible solvent; reacting the metal hydride with tetrahydrofuran, a (C₁-C₁₀)alcohol, isopropyl alcohol, ethanol, methanol, ethyl acetate, or a combination thereof; reacting the metal hydride with a reactive gas or vapor including a (C₁-C₁₀)alcohol, isopropyl alcohol, ethanol, methanol, or a combination thereof; reacting the metal hydride with a metal hydride poison; heating the metal hydride to decompose the metal hydride; or a combination thereof. When subjected to testing conditions the treated hydrogen generator cartridge produces no hydrogen gas or produces hydrogen gas at a lower rate than the at least partially unconsumed hydrogen generator cartridge subjected to the testing conditions. The testing conditions include heating at less than or equal to 300 °C, agitation, exposing the metal hydride to a protic solvent, or a combination thereof.

Various aspects of the present invention improve the safety of at least partially consumed hydrogen-generating cartridges, such as making them safe for transport, thereby increasing the viability of hydrogen fuel cell technology that runs on hydrogen-generating cartridges. Various aspects of the present invention simplify and reduce the cost of disposal of at least partially consumed hydrogen-generating cartridges.

### DETAILED DESCRIPTION OF THE INVENTION

Reference will now be made in detail to certain aspects of the disclosed subject matter. While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in a specific order as recited herein. Alternatively, in any aspect(s) disclosed herein, specific acts may be carried out in any order without departing from the principles of the invention, except when a temporal or operational sequence is explicitly recited. Furthermore, specified acts can be carried out concurrently unless explicit claim language recites that they be carried out separately or the plain meaning of the claims would require it. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of" as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

### Method of treating an at least partially unconsumed hydrogen generator cartridge

Various aspects of the present disclosure provide a method of treating an at least partially unconsumed hydrogen generator cartridge. The at least partially unconsumed hydrogen generator cartridge can include water and a metal hydride. The method can include treating the at least partially unconsumed hydrogen generator cartridge to form a treated hydrogen generator cartridge. When subjected to testing conditions the treated hydrogen generator cartridge can produce no hydrogen gas or can produce hydrogen gas at a lower rate than the at least partially unconsumed hydrogen generator cartridge subjected to the same testing conditions. The testing conditions can be any suitable testing conditions for determining whether the treated hydrogen generator cartridge can produce hydrogen gas, such as including heating at less than or equal to 80 °C, heating to a temperature in the range of 80 °C to 300 °C (e.g., greater than or equal to 80 °C, less than or equal to 300 °C, and less than, equal to, or greater than 100 °C, 120, 140, 160, 180, 200, 220, 240, 260, or 280 °C), agitation, exposing the metal hydride to a protic solvent such as an alcohol (e.g., methanol, ethanol, isopropyl alcohol) or water (e.g., any suitable exposing, such as spraying the solvent onto the metal hydride, flowing the solvent to the metal hydride, submerging the metal hydride, or the like), or a combination thereof.

The treating of the at least partially unconsumed hydrogen generator cartridge can include removing the water from the hydrogen generator cartridge. The treating can include adding a chemical barrier to the metal hydride as a physical barrier to slow or prevent further reaction of the metal hydride. The treating can include dissolving the metal hydride in a solvent including tetrahydrofuran, a (C₁-C₁₀)alcohol, isopropyl alcohol, ethanol, methanol, ethyl acetate, a di(C₁-C₁₀)alkyl ether (e.g., diethyl ether), benzene, toluene, or a combination thereof, and removing the solvent from the cartridge. The treating can include reacting the metal hydride with a protic solvent in a non-reactive miscible solvent. The treating can include reacting the metal hydride with tetrahydrofuran, a (C₁-C₁₀)alcohol, isopropyl alcohol, ethanol, methanol, ethyl acetate, or a combination thereof. The treating can include reacting the metal hydride with a reactive gas or vapor including a (C₁-C₁₀)alcohol, isopropyl alcohol, ethanol, methanol, or a combination thereof. The treating can include reacting the metal hydride with a metal hydride poison. The treating can include heating the metal hydride to decompose the metal hydride. The treating can be performed for any suitable time period, such as 0.1 minutes to 180 minutes, or 0.5 minutes to 120 minutes, or 1 minute to 60 minutes, or less than or equal to 180 minutes and greater than or equal to 0.1 minutes and less than, equal to, or greater than 0.2 minutes, 0.4, 0.6, 0.8, 1, 1.5, 2, 2.5, 3, 4, 5, 6, 7, 8, 9, 10, 12, 14, 16, 18, 20, 25, 30, 35, 40, 45, 50, 55, 60, 70, 80, 90, 100, 110, 120, 130, 140, 150, 160, or 170 minutes. The treating can include any suitable combination of the aforementioned treatments.

The treating can be performed without opening the cartridge. Performing the treating can include installing the cartridge into a treatment apparatus that performs the treating. Installing the cartridge into the apparatus that performs the treating can include attaching to the apparatus a component of the cartridge including a gas flow inlet, gas flow outlet, liquid flow inlet, liquid flow outlet, or a combination thereof. The apparatus can include one or more safety-related pressure relief devices. The apparatus can include one or more sensors that detect, for example, flow rate and/or temperature, and that can provide feedback to the one or more safety-related pressure relief devices. For treatment methods including contacting the metal hydride with liquid or gas/vapor, the apparatus can inject the liquid or gas/vapor into the cartridge (e.g., from the bottom-up, from the top-down, or in any suitable manner), and can fill the cartridge until all metal hydride has been contacted.

The metal hydride in the hydrogen generating cartridge can be any suitable metal hydride, such as lithium hydride, lithium aluminum hydride, lithium borohydride, sodium hydride, sodium borohydride, potassium hydride, potassium borohydride, magnesium hydride, calcium hydride, or a salt and/or derivative thereof. The metal hydride in the hydrogen generating cartridge can be lithium aluminum hydride (LAH). The hydrogen generating cartridge can optionally include LiAlH₄, LiAlO₂, LiOH, Al(OH)₃, Li₃AlH₆, Al, LiH, LiAlH(OEt)₄, [LiAl₂(OH)₆]OH or a hydride salt thereof, or a combination thereof.

The at least partially unconsumed hydrogen generator cartridge can be any suitable hydrogen generator cartridge including water and a metal hydride that is capable of producing at least some hydrogen gas when subjected to the testing conditions described herein. The at least partially unconsumed hydrogen generator cartridge can be a completely full hydrogen generator cartridge having 100% of its hydrogen generating capacity, or a substantially unconsumed hydrogen generator cartridge having nearly 100% of its hydrogen generating capacity. The at least partially unconsumed hydrogen generator cartridge can be a mostly consumed hydrogen generator cartridge having less than 10% of its hydrogen generating capacity. The at least partially unconsumed hydrogen generator cartridge can have a hydrogen generating capacity of 0.001% to 100% of its full hydrogen generating capacity, or 0.001% to 80%, or 0.001% to 50%, or 0.001% to 20%, or 0.001% to 10%, or 0.001% to 5%, or 0.001% to 1%, or less than or equal to 100% and greater than 0% and less than, equal to, or greater than 0.001%, 0.005, 0.01, 0.05, 0.1, 0.5, 1, 2, 3, 4, 5, 6, 8, 10, 12, 14, 16, 18, 20, 25, 30, 35, 40, 45, 50, 55, 60, 65, 70, 75, 80, 85, 90, 95, 96, 97, 98, 99, 99.9, 99.99, or 99.999% of its full hydrogen generating capacity..

The testing conditions can be any suitable testing conditions for determining whether the treated hydrogen generator cartridge can produce hydrogen gas, such as including heating at less than or equal to 80 °C, heating to a temperature in the range of 80 °C to 300 °C, agitation, exposing the metal hydride to a protic solvent, or a combination thereof. The testing conditions can include heating to less than or equal to 80 °C, such as heating to a temperature of 30 °C to 80 °C, or 50 °C to 80 °C, or 70 °C to 80 °C, or less than or equal to 80 °C and greater than or equal to 30 °C and less than, equal to, or greater than 32 °C, 34, 36, 38, 40, 42, 44, 46, 48, 50, 52, 54, 56, 58, 60, 62, 64, 66, 68, 70, 72, 74, 76, or 78 °C. The testing conditions can include heating to a temperature in the range of 80 °C to 300 °C, such as greater than or equal to 80 °C, less than or equal to 300 °C, and less than, equal to, or greater than 100 °C, 120, 140, 160, 180, 200, 220, 240, 260, or 280 °C. The testing conditions can include agitation of the cartridge, such as any suitable type of mechanical agitation, such vibration or shaking. The testing conditions can include exposing the metal hydride from the cartridge to a protic solvent. The exposing can be any suitable exposing, such as spraying the solvent onto the metal hydride, flowing the solvent to the metal hydride, submerging the metal hydride in the solvent, or the like. The protic solvent can be any suitable protic solvent, such as a water, a (C₁-C₁₀)alcohol, isopropyl alcohol, ethanol, methanol, or a combination thereof. The heating to less than or equal to 300 °C, the agitation of the cartridge, the exposing of the metal hydride to protic solvent, or a combination thereof, can be performed for any suitable time period, such as 0.1 minutes to 180 minutes, or 0.5 minutes to 120 minutes, or 1 minute to 60 minutes, or less than or equal to 180 minutes and greater than or equal to 0.1 minutes and less than, equal to, or greater than 0.2 minutes, 0.4, 0.6, 0.8, 1, 1.5, 2, 2.5, 3, 4, 5, 6, 7, 8, 9, 10, 12, 14, 16, 18, 20, 25, 30, 35, 40, 45, 50, 55, 60, 70, 80, 90, 100, 110, 120, 130, 140, 150, 160, or 170 minutes. Applying the testing conditions to the cartridge can include installing the cartridge into a treatment apparatus that performs the testing.

The treating of the at least partially unconsumed hydrogen generator cartridge can include removing the water from the hydrogen generator cartridge. The removing of the water from the hydrogen generator cartridge can include heating the hydrogen generator cartridge, such as to a temperature of 50 °C to 400 °C, or less than or equal to 400 °C and greater than or equal to 50 °C and less than, equal to, or greater than 60 °C, 70, 80, 90, 100, 110, 120, 130, 140, 150, 160, 170, 180, 190, 200, 220, 240, 260, 280, 300, 320, 340, 360, 380, or 390 °C. The removing of the water can include flowing an inert gas through the cartridge, such as through a fuel bed in the cartridge that includes the metal hydride. The inert gas can be a room temperature inert gas, or the inert gas can be a heated gas having a temperature of 50 °C to 400 °C, or less than or equal to 400 °C and greater than or equal to 50 °C and less than, equal to, or greater than 60 °C, 70, 80, 90, 100, 110, 120, 130, 140, 150, 160, 170, 180, 190, 200, 220, 240, 260, 280, 300, 320, 340, 360, 380, or 390 °C. The heating of the cartridge to a temperature of 50 °C to 400 °C, the flowing of the inert gas, or the combination thereof, can be sustained for any suitable time period, such as 0.1 minutes to 180 minutes, or 0.5 minutes to 120 minutes, or 1 minute to 60 minutes, or less than or equal to 180 minutes and greater than or equal to 0.1 minutes and less than, equal to, or greater than 0.2 minutes, 0.4, 0.6, 0.8, 1, 1.5, 2, 2.5, 3, 4, 5, 6, 7, 8, 9, 10, 12, 14, 16, 18, 20, 25, 30, 35, 40, 45, 50, 55, 60, 70, 80, 90, 100, 110, 120, 130, 140, 150, 160, or 170 minutes. The removing of the water can be conducted at any suitable pressure, such as at atmospheric pressure, or at reduced pressure such as a pressure of 0.01 inches Hg to 15 inches Hg, or less than 29.9 inches Hg and greater than or equal to 0.01 inches Hg and less than, greater than, or equal to 0.05 inches Hg, 0.1, 0.5, 1, 2, 3, 4, 5, 6, 7, 8, 9, 10, 11, 12, 13, 14, 15, 16, 17, 18, 19, 20, 21, 22, 23, 24, 25, 26, 27, 28, or 29 inches Hg. The removal of water can remove all of the water, or can remove part of the water (e.g., the water that is loosely bound) sufficient to reduce or eliminate the emission of hydrogen gas by the cartridge. The removal of water can include draining the water reservoir of the cartridge prior to performing the heating and/or flowing of the inert gas.

The treating of the at least partially unconsumed hydrogen generator cartridge can include adding a chemical barrier to the metal hydride as a physical barrier to slow or prevent further reaction of the metal hydride. The chemical barrier can be any suitable chemical barrier that can physically slow or prevent further reaction of the metal hydride. For example, the chemical barrier can include an inert and/or non-protic solvent that is substantially immiscible with water. The chemical barrier can include one or more oils, such as a mineral oil and/or another non-reactive oil.

The treating of the at least partially unconsumed hydrogen generator cartridge can include dissolving the metal hydride in a solvent including tetrahydrofuran, a (C₁-C₁₀)alcohol, isopropyl alcohol, ethanol, methanol, ethyl acetate, a di(C₁-C₁₀)alkyl ether (e.g., diethyl ether), benzene, toluene, or a combination thereof, and removing the solvent from the cartridge. The solvent can include a (C₁-C₁₀)alcohol such as methanol, ethanol, propanol, butanol, pentanol, hexanol, heptanol, octanol, nonanol, or decanol. The solvent can include tetrahydrofuran (THF), diethyl ether, or a combination thereof.

The treating of the at least partially unconsumed hydrogen generator cartridge can include reacting the metal hydride with a protic solvent in a non-reactive miscible solvent. The protic solvent can be any suitable protic solvent, such as water, an alcohol (e.g., a (C₁-C₁₀)alcohol such as methanol or ethanol), an organic acid (e.g., acetic acid or formic acid), or a combination thereof. The non-miscible solvent can any suitable nonpolar non-miscible solvent, such as an alkane (e.g., pentane, hexane, heptane, petroleum spirits), an aromatic solvent (e.g., benzene, toluene, xylene), chloroform, a di(C₁-C₁₀)alkyl ether (e.g., diethyl ether), ethyl acetate, methylene chloride, pyridine, an oil (e.g., mineral oil or another non-reactive oil), or a combination thereof. The protic solvent can be dilute in the non-miscible solvent; for example, the protic solvent can form a proportion of the combination of the protic solvent and the non-miscible solvent that is 0.001 wt% to 20 wt%, or less than or equal to 20 wt% and greater than or equal to 0.001 wt% and less than, equal to, or greater than 0.005, 0.01, 0.05, 0.1, 0.5, 1, 2, 3, 4, 5, 6, 8, 10, 12, 14, 16, or 18 wt%. The reaction of the metal hydride with the protic solvent in the non-reactive miscible solvent can be performed with a controlled rate of addition and/or with monitoring of the reaction of the protic solvent and the metal hydride to maintain the rate of reaction and/or temperature or the cartridge at a safe temperature that does not damage the cartridge, such as less than 400 °C, less than 300 °C, less than 300 °C, less than 200 °C, less than 100 °C, or less than 80 °C, or less than 60 °C, or less than 50 °C.

The treating of the at least partially unconsumed hydrogen generator cartridge can include reacting the metal hydride with tetrahydrofuran, a (C₁-C₁₀)alcohol, isopropyl alcohol, ethanol, methanol, ethyl acetate, or a combination thereof. The treatment can include reacting the metal hydride with a (C₁-C₁₀)alcohol such as methanol or ethanol. Such treatment can quench the unspent metal hydride. The reaction of the metal hydride can be performed with a controlled rate of addition and/or with monitoring of the reaction to maintain the rate of reaction and/or temperature at a safe temperature that does not damage the cartridge, such as less than 400 °C, less than 300 °C, less than 300 °C, less than 200 °C, less than 100 °C, or less than 80 °C, or less than 60 °C, or less than 50 °C.

The treating of the at least partially unconsumed hydrogen generator cartridge can include reacting the metal hydride with a reactive gas or vapor including a (C₁-C₁₀)alcohol, isopropyl alcohol, ethanol, methanol, or a combination thereof. The reactive gas or vapor can optionally further includes carbon dioxide, water vapor, or a combination thereof. The reaction with the reactive gas or vapor can be performed with a controlled rate of addition and/or with monitoring of the reaction to maintain the rate of reaction and/or temperature at a safe temperature that does not damage the cartridge, such as less than 400 °C, less than 300 °C, less than 300 °C, less than 200 °C, less than 100 °C, or less than 80 °C, or less than 60 °C, or less than 50 °C.

The treating of the at least partially unconsumed hydrogen generator cartridge can include reacting the metal hydride with a metal hydride poison. The metal hydride poison can make the metal hydride unreactive and unable to release further hydrogen. The metal hydride poison can be any suitable metal hydride poison that decreases or eliminates the reactivity of the metal hydride. The poison can include sulfur, halogen, tin, or a combination thereof. The poison can include CO, CO₂, or a combination thereof. The poison can include a sulfur-based compound, such as H₂S, CH₃SH, or a combination thereof. The poison can include a metal halide, such as TiCl₄. The poison can include a salt, such as KNaC₄H₄O₆ (Rochelle's salt) or a hydrate thereof.

The treating of the at least partially unconsumed hydrogen generator cartridge can include heating the metal hydride to decompose the metal hydride. The heating can include heating to greater than or equal to 160 °C, such as 160 °C to 400 °C, or less than or equal to 400 °C and greater than or equal to 160 °C and less than, equal to, or greater than 170 °C, 180, 190, 200, 220, 240, 260, 280, 300, 320, 340, 360, or 380 °C.

In various aspects the treatment of the at least partially unconsumed cartridge can further includes reaction with a dilute acid such as HCl or H₂SO₄ and/or with a dilute base such as NaOH or KOH.

The terms and expressions that have been employed are used as terms of description and not of limitation, and there is no intention in the use of such terms and expressions of excluding any equivalents of the features shown and described or portions thereof, but it is recognized that various modifications are possible within the scope of the aspects of the present invention. Thus, it should be understood that although the present invention has been specifically disclosed by specific aspects and optional features, modification and variation of the concepts herein disclosed may be resorted to by those of ordinary skill in the art, and that such modifications and variations are considered to be within the scope of aspects of the present invention.

### Exemplary Aspects.

The following exemplary aspects are provided, the numbering of which is not to be construed as designating levels of importance:
Aspect 1 provides a method of treating an at least partially unconsumed hydrogen generator cartridge comprising water and a metal hydride, the method comprising:
   treating the at least partially unconsumed hydrogen generator cartridge comprising
      removing the water from the hydrogen generator cartridge,
      adding a chemical barrier to the metal hydride as a physical barrier to slow or prevent further reaction of the metal hydride,
      dissolving the metal hydride in a solvent comprising tetrahydrofuran, a (C₁-C₁₀)alcohol, isopropyl alcohol, ethanol, methanol, ethyl acetate, a di(C₁-C₁₀)alkyl ether (e.g., diethyl ether), benzene, toluene, or a combination thereof, and removing the solvent from the cartridge,
      reacting the metal hydride with a protic solvent in a non-reactive miscible solvent,
      reacting the metal hydride with tetrahydrofuran, a (C₁-C₁₀)alcohol, isopropyl alcohol, ethanol, methanol, ethyl acetate, or a combination thereof,
      reacting the metal hydride with a reactive gas or vapor comprising a (C₁-C₁₀)alcohol, isopropyl alcohol, ethanol, methanol, or a combination thereof,
      reacting the metal hydride with a metal hydride poison,
      heating the metal hydride to decompose the metal hydride, or
      a combination thereof,
   to form a treated hydrogen generator cartridge;
   wherein when subjected to testing conditions the treated hydrogen generator cartridge produces no hydrogen gas or produces hydrogen gas at a lower rate than the at least partially unconsumed hydrogen generator cartridge subjected to the testing conditions, and wherein the testing conditions comprise heating at less than or equal to 300 °C, agitation, exposing the metal hydride to a protic solvent, or a combination thereof.
Aspect 2 provides the method of Aspect 1, wherein the testing conditions comprise heating at less than or equal to 300 °C (e.g., less than or equal to 80 °C).
Aspect 3 provides the method of any one of Aspects 1-2, wherein the testing conditions comprise agitation of the cartridge.
Aspect 4 provides the method of any one of Aspects 1-3, wherein the testing conditions comprise exposing the metal hydride from the cartridge to a protic solvent (e.g., submerging the metal hydride from the cartridge in water).
Aspect 5 provides the method of any one of Aspects 1-4, wherein the at least partially unconsumed hydrogen generator cartridge is a substantially unconsumed hydrogen generator cartridge.
Aspect 6 provides the method of any one of Aspects 1-5, wherein the at least partially unconsumed hydrogen generator cartridge is a partially consumed hydrogen generator cartridge.
Aspect 7 provides the method of any one of Aspects 1-6, wherein the metal hydride is lithium aluminum hydride (LAH).
Aspect 8 provides the method of any one of Aspects 1-7, wherein the method comprises installing the cartridge into a treatment apparatus that performs the treating.
Aspect 9 provides the method of Aspect 8, wherein installing the cartridge into the apparatus comprises attaching to the apparatus a component of the cartridge comprising a gas flow inlet, gas flow outlet, liquid flow inlet, liquid flow outlet, or a combination thereof.
Aspect 10 provides the method of any one of Aspects 1-9, wherein the method comprises the removing of the water from the hydrogen generator cartridge.
Aspect 11 provides the method of Aspect 10, wherein the removing of the water from the hydrogen generator cartridge comprises heating the hydrogen generator cartridge.
Aspect 12 provides the method of Aspect 11, wherein the heating comprises heating to a temperature of 50 °C to 400 °C.
Aspect 13 provides the method of any one of Aspects 10-12, wherein the removing of the water comprises flowing an inert gas through a fuel bed comprising the metal hydride.
Aspect 14 provides the method of Aspect 13, wherein the inert gas flowed through the fuel bed is a heated inert gas.
Aspect 15 provides the method of any one of Aspects 10-14, wherein the removing of the water is conducted at less than atmospheric pressure.
Aspect 16 provides the method of any one of Aspects 10-14, wherein the removing of the water is conducted at a pressure of 0.01 inches Hg to 15 inches Hg.
Aspect 17 provides the method of any one of Aspects 1-16, wherein the method comprises the adding of the chemical barrier to the metal hydride as a physical barrier to slow or prevent further reaction of the metal hydride.
Aspect 18 provides the method of Aspect 17, wherein the chemical barrier comprises an inert and/or non-protic solvent that is substantially immiscible with water.
Aspect 19 provides the method of any one of Aspects 17-18, wherein the chemical barrier comprises mineral oil.
Aspect 20 provides the method of any one of Aspects 1-19, wherein the method comprises the dissolving of the metal hydride in the solvent and removing the solvent from the cartridge.
Aspect 21 provides the method of Aspect 20, wherein the solvent comprises tetrahydrofuran (THF), diethyl ether, or a combination thereof.
Aspect 22 provides the method of any one of Aspects 1-21, wherein the method comprises reacting the metal hydride with a protic solvent comprising water, a (C₁-C₁₀)alcohol, isopropyl alcohol, ethanol, methanol, or a combination thereof.
Aspect 23 provides the method of any one of Aspects 1-22, wherein the method comprises reacting the metal hydride with a protic solvent in a non-reactive miscible solvent.
Aspect 24 provides the method of any one of Aspects 1-23, wherein the method comprises reacting the metal hydride with an alcohol in a non-reactive miscible solvent.
Aspect 25 provides the method of Aspect 24, wherein the alcohol is ethyl alcohol.
Aspect 26 provides the method of any one of Aspects 1-25, wherein the method comprises the reacting of the metal hydride with the reactive gas or vapor comprising a (C₁-C₁₀)alcohol, isopropyl alcohol, ethanol, methanol, or a combination thereof.
Aspect 27 provides the method of any one of Aspects 1-26, wherein the method comprises the reacting of the metal hydride with the metal hydride poison.
Aspect 28 provides the method of Aspect 27, wherein the poison comprises sulfur, halogen, tin, or a combination thereof.
Aspect 29 provides the method of any one of Aspects 27-28, wherein the poison comprises CO, CO₂, or a combination thereof.
Aspect 30 provides the method of any one of Aspects 27-29, wherein the poison comprises a sulfur-based compound.
Aspect 31 provides the method of Aspect 30, wherein the sulfur-based compound comprises H₂S, CH₃SH, or a combination thereof.
Aspect 32 provides the method of any one of Aspects 27-31, wherein the poison comprises a metal halide.
Aspect 33 provides the method of Aspect 32, wherein the metal halide comprises TiCl₄.
Aspect 34 provides the method of any one of Aspects 27-33, wherein the poison comprises a salt.
Aspect 35 provides the method of Aspect 34, wherein the salt comprises KNaC₄H₄O₆ or a hydrate thereof.
Aspect 36 provides the method of any one of Aspects 1-35, wherein the method comprises the heating of the metal hydride to decompose the metal hydride.
Aspect 37 provides the method of Aspect 36, wherein the heating comprises heating to greater than or equal to 160 °C.
Aspect 38 provides the method of any one or any combination of Aspects 1-37 optionally configured such that all elements or options recited are available to use or select from.

## Claims

1. A method of treating an at least partially unconsumed hydrogen generator cartridge comprising water and a metal hydride, the method comprising:
treating the at least partially unconsumed hydrogen generator cartridge comprising
removing the water from the hydrogen generator cartridge,
adding a chemical barrier to the metal hydride as a physical barrier to slow or prevent further reaction of the metal hydride,
dissolving the metal hydride in a solvent comprising tetrahydrofuran, a (C₁-C₁₀)alcohol, ethyl acetate, a di(C₁-C₁₀)alkyl ether, benzene, toluene, or a combination thereof, and removing the solvent from the cartridge,
reacting the metal hydride with a protic solvent in a non-reactive miscible solvent,
reacting the metal hydride with tetrahydrofuran, a (C₁-C₁₀)alcohol, ethyl acetate, or a combination thereof,
reacting the metal hydride with a reactive gas or vapor comprising a (C₁-C₁₀)alcohol, or a combination thereof,
reacting the metal hydride with a metal hydride poison,
heating the metal hydride to decompose the metal hydride,
or a combination thereof,
to form a treated hydrogen generator cartridge;
wherein when subjected to testing conditions the treated hydrogen generator cartridge produces no hydrogen gas or produces hydrogen gas at a lower rate than the at least partially unconsumed hydrogen generator cartridge subjected to the testing conditions, and wherein the testing conditions comprise heating at less than or equal to 300 °C, agitation, exposing the metal hydride to a protic solvent, or a combination thereof.

2. The method of claim 1, wherein the (C₁-C₁₀)alcohol is isopropyl alcohol, ethanol, methanol, or a combination thereof.

3. The method of any one of claims 1-2, wherein the metal hydride is lithium aluminum hydride (LAH).

4. The method of any one of claims 1-3, wherein the method comprises installing the cartridge into a treatment apparatus that performs the treating, wherein installing the cartridge into the apparatus comprises attaching to the apparatus a component of the cartridge comprising a gas flow inlet, gas flow outlet, liquid flow inlet, liquid flow outlet, or a combination thereof.

5. The method of any one of claims 1-4, wherein the method comprises the removing of the water from the hydrogen generator cartridge, wherein the removing of the water from the hydrogen generator cartridge comprises: heating the hydrogen generator cartridge to a temperature of 50 °C to 400 °C, subjecting the hydrogen generator cartridge to less than atmospheric pressure, or a combination thereof.

6. The method of any one of claims 1-4, wherein the method comprises the removing of the water from the hydrogen generator cartridge, wherein the removing of the water comprises flowing an inert gas through a fuel bed comprising the metal hydride in the hydrogen generator cartridge.

7. The method of claim 6, wherein the inert gas flowed through the fuel bed is a heated inert gas.

8. The method of any one of claims 1-7, wherein the method comprises the adding of the chemical barrier to the metal hydride as a physical barrier to slow or prevent further reaction of the metal hydride, wherein the chemical barrier comprises an inert and/or non-protic solvent that is substantially immiscible with water, and/or wherein the chemical barrier comprises an oil.

9. The method of any one of claims 1-8, wherein the method comprises the dissolving of the metal hydride in the solvent and removing the solvent from the cartridge, wherein the solvent comprises tetrahydrofuran (THF), diethyl ether, or a combination thereof.

10. The method of any one of claims 1-9, wherein the method comprises reacting the metal hydride with a protic solvent comprising a (C₁-C₁₀)alcohol.

11. The method of any one of claims 1-10, wherein the method comprises reacting the metal hydride with a protic solvent in a non-reactive miscible solvent.

12. The method of any one of claims 1-11, wherein the method comprises the reacting of the metal hydride with the reactive gas or vapor comprising a (C₁-C₁₀)alcohol.

13. The method of any one of claims 1-12, wherein the method comprises the reacting of the metal hydride with the metal hydride poison, wherein the poison comprises sulfur, halogen, tin, CO, CO₂, a sulfur-based compound, a metal halide, a salt, or a combination thereof.

14. The method of claim 13, wherein the poison comprises H₂S, CH₃SH, TiCl₄, KNaC₄H₄O₆ or a hydrate thereof, or a combination thereof.

15. The method of any one of claims 1-14, wherein the method comprises the heating of the metal hydride to decompose the metal hydride, wherein the heating comprises heating to greater than or equal to 160 °C.
